# EUROPEAN PATENT APPLICATION

(11) **EP 1 763 167 A1**
(43) Date of publication of application: **14.03.2007**
(21) Application number: 06115413.4
(22) Date of filing: 13.06.2006
(51) Int. Cl.: H04J 14/02, H04B 10/17, H01S 3/13

(54) **Optical amplification apparatus having function of flattening channel output spectrum**

(30) Priority: 13.09.2005 KR 2005085196
(71) Applicant: Electronics and Telecommunications Research Institute, Daejeon-city (KR)
(72) Inventor: Chang, Sun Hyok, Daejeon-city (KR); Kim, Kwang Joon, Daejeon-city (KR); Ko, Je Soo, Daejeon-city (KR)
(74) Representative: Betten & Resch

(57) **Abstract**

An optical amplification apparatus having a function of flattening a channel output spectrum is provided. The optical amplification apparatus includes an optical amplifier amplifying an input optical signal and outputting an output optical signal; a pump unit pumping the input optical signal at a front and a back of the optical amplifier; a first detection unit selecting a plurality of particular channels with respect to a separated part of the input optical signal to be input to an input terminal of the optical amplifier and converting an input optical signal in each of the selected channels into an electrical signal; a second detection unit selecting the same channels as the plurality of particular channels selected by the first detection unit with respect to a separated part of the output optical signal output from an output terminal of the optical amplifier and converting an output optical signal in each of the selected channels into an electrical signal; and a controller receiving electrical signals respectively in the selected channels from the first and second detection units, determining whether an optical signal gain for each of the particular channels has changed, and controlling a current provided to the pump unit according to the change in the optical signal gain, thereby accomplishing automatic gain control (AGC) and automatic level control (ALC) and maintaining a flatness of a wavelength division multiplexing (WDM) output.

## Description

### CROSS-REFERENCE TO RELATED PATENT APPLICATIONS

This application claims the benefit of Korean Patent Application No. 10-2005-0085196, filed on September 13, 2005, in the Korean Intellectual Property Office, the disclosure of which is incorporated herein in its entirety by reference.

### BACKGROUND OF THE INVENTION

### 1. Field of the Invention

The present invention relates to an optical amplification apparatus used in a wavelength division multiplexing (WDM) optical transmission system, and more particularly, to an optical amplification apparatus for performing automatic gain control (AGC) and automatic level control (ALC) and flattening an optical channel output spectrum in WDM.

### 2. Description of the Related Art

Optical amplifiers such as erbium doped fiber amplifiers (EDFA) or fiber Raman amplifiers (FRA) have a wide gain bandwidth and are thus utilized in wavelength division multiplexing (WDM) optical transmission systems. Meanwhile, in optical transmission systems, network flexibility is important together with transmission capacity. In particular, it should be able to freely adjust the transmission capacity. The transmission capacity is determined by the number of channels used for transmitting signal light and transmission performance of the channels should not be influenced by the addition or removal of other channels during transmission. However, when the number of channels changes and thus optical input power changes, gain changes and transient effects occur in an output in conventional optical amplifiers used in the WDM optical transmission system. To address these problems, automatic gain control (AGC) is required in fiber amplifiers.

In addition, in a WDM optical transmission system, a transmission span or span loss may change according to environmental factors. When the span loss changes, an input of an amplifier changes, and thus, an output changes. Automatic level control (ALC) is a function that maintains an output constant even when an input changes due to the span loss. ALC is also necessary for a WDM fiber amplifier.

A result of implementing AGC and ALC in an optical amplifier and particularly an EDFA has been presented by K. Motoshima [IEEE Journal of Lightwave Technology, Vol. 19, No. 11, pp. 1759-1767, Nov. 2001]. K. Motoshima monitored inputs and outputs in three stages of gain blocks included in an EDFA and adjusted the optical power of a pump laser diode (LD) using an AGC circuit in each stage gain block, thereby accomplishing AGC. In addition, after optical power of a particular channel was filtered from a final output and measured, a variable optical attenuator (VOA) disposed between the first stage and the second stage was adjusted to maintain constant optical power, thus achieving ALC.

Moreover, in a WDM optical transmission system, optical power transfer from a shorter wavelength channel to a longer wavelength channel occurs in a transmission fiber due to stimulated Raman scattering among WDM channels. Accordingly, the power of the shorter wavelength channel is reduced while the power of the longer wavelength channel is increased, and therefore, an optical WDM channel power spectrum has a slope in a wavelength domain. With the increase in the number of WDM channels for large-capacity transmission, the intensity of an input signal is increased in the transmission fiber. As the intensity of the input signal increases in the transmission fiber, a WDM channel power slope also increases. Such slope of the WDM channel power spectrum should be compensated for. However, the slope cannot be eliminated with the EDFA gain control suggested by the K. Motoshima.

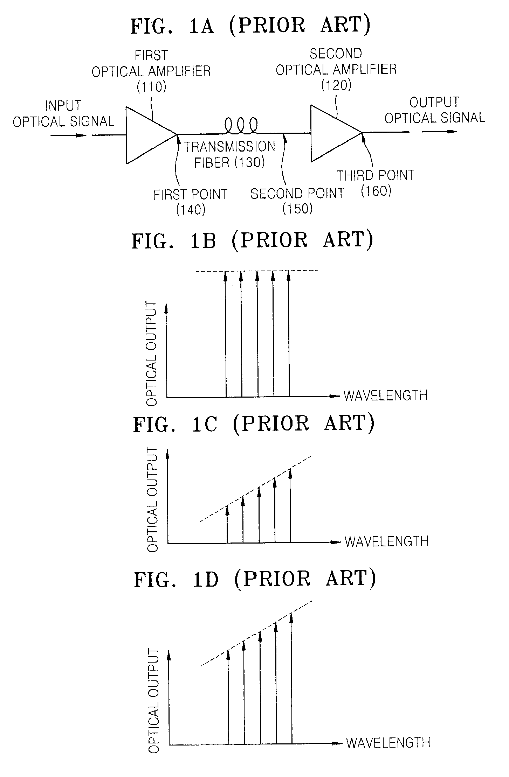

FIG. 1A illustrates a conventional optical transmission fiber. FIG. 1B illustrates a WDM channel output spectrum at a first point 140 illustrated in FIG. 1A. FIG. 1C illustrates a WDM channel output spectrum at a second point 150 illustrated in FIG. 1A. FIG. 1D illustrates a WDM channel output spectrum at a third point 160 illustrated in FIG. 1A when a function of flattening a WDM channel output spectrum is not provided.

Referring to FIG. 1A, an input optical signal is amplified by a first optical amplifier 110 and then passes through a transmission fiber 130. Here, the optical signal is attenuated due to loss in the transmission fiber 130, and therefore, the optical signal is amplified again using a second optical amplifier 120 and is then transmitted to a next span. In case of multi-channel WDM transmission, an optical output of an optical amplifier must be maintained constant in each channel in order to guarantee the transmission performance of every channel. In other words, the output spectrum flatness of a WDM channel must be maintained constant.

Referring to FIG. 1B, a WDM channel output is flat at the first point 140 illustrated in FIG. 1A. Referring to FIG. 1C, the WDM channel output at the second point 150 illustrated in FIG. 1A has been attenuated due to fiber loss after passing through the first point 140 and the transmission fiber 130. In addition, since energy transfer from a shorter wavelength channel to a longer wavelength channel occurs due to stimulated Raman scattering (SRS), a WDM channel output spectrum at the second point 150 appears as illustrated in FIG. 1C. Outputs are different according to WDM channels, and therefore, the WDM channel output spectrum has a slope. The slope of the WDM channel output spectrum varies with the number of WDM channels and power of each channel. FIG. 1D illustrates a WDM channel output spectrum obtained at the third position 160 after each channel signal passes through the second optical amplifier 120. As shown in FIG. 1D, the flatness of the WDM channel output spectrum is not maintained constant.

### SUMMARY OF THE INVENTION

The present invention provides an optical amplification apparatus for automatically adjusting a gain of an optical amplifier, automatically controlling the level of output optical power, and compensating for a slope of a wavelength division multiplexing (WDM) channel output spectrum, which is caused by stimulated Raman scattering (SRS).

According to an aspect of the present invention, there is provided an optical amplification apparatus having a function of flattening a channel output spectrum. The optical amplification apparatus includes an optical amplifier amplifying an optical signal and outputting an output optical signal; a pump unit pumping the optical signal at a front and a back of the optical amplifier; a detection unit selecting a plurality of particular channels with respect to a separated part of the output optical signal of the optical amplifier and converting an optical power of each of the selected channels into an electrical signal; and a controller receiving electrical signals in the selected channels, respectively, determining whether optical power of each electrical signal has changed, and controlling a current provided to the pump unit according to the change in the optical power to eliminate the change in the optical power.

According to another aspect of the present invention, there is provided an optical amplification apparatus having a function of flattening a channel output spectrum. The optical amplification apparatus includes an optical amplifier amplifying an optical signal and outputting an output optical signal; a pump unit pumping the input optical signal at a front and a back of the optical amplifier; a first detection unit selecting a plurality of particular channels with respect to a separated part of the input optical signal to be input to an input terminal of the optical amplifier and converting an input optical signal in each of the selected channels into an electrical signal; a second detection unit selecting the same channels as the plurality of particular channels selected by the first detection unit with respect to a separated part of the output optical signal output from an output terminal of the optical amplifier and converting an output optical signal in each of the selected channels into an electrical signal; and a controller receiving electrical signals respectively in the selected channels from the first and second detection units, determining whether an optical signal gain for each of the particular channels has changed, and controlling a current provided to the pump unit according to the change in the optical signal gain.

### BRIEF DESCRIPTION OF THE DRAWINGS

The above and other features and advantages of the present invention will become more apparent by describing in detail exemplary embodiments thereof with reference to the attached drawings in which:
FIG. 1A illustrates a conventional optical transmission fiber;
FIG. 1B illustrates a wavelength division multiplexing (WDM) channel output spectrum at a first point illustrated in FIG. 1A;
FIG. 1C illustrates a WDM channel output spectrum at a second point illustrated in FIG. 1A;
FIG. 1D illustrates a WDM channel output spectrum at a third point illustrated in FIG. 1A when a function of flattening a WDM channel output is not provided;
FIG. 2 illustrates an optical amplification apparatus having a function of flattening a channel output, according to an embodiment of the present invention;
FIG. 3 illustrates an optical amplification apparatus having a function of flattening a channel output, according to another embodiment of the present invention; and
FIG. 4 illustrates a WDM channel output spectrum obtained from the optical amplification apparatuses illustrated in FIGS. 2 and 3.

### DETAILED DESCRIPTION OF THE INVENTION

Hereinafter, exemplary embodiments of the present invention will be described in detail with reference to the attached drawings. Like reference numerals in the drawings denote like elements.

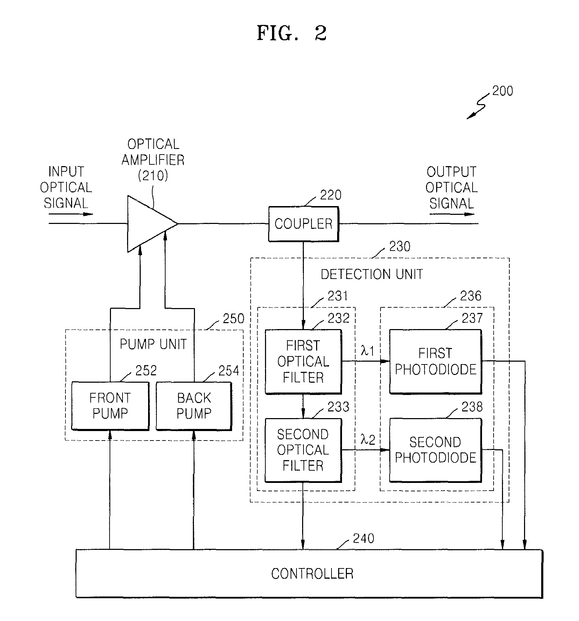

FIG. 2 illustrates an optical amplification apparatus 200 having a function of flattening a channel output, according to an embodiment of the present invention. Referring to FIG. 2, the optical amplification apparatus 200 includes an optical amplifier 210, a coupler 220, a detection unit 230, a controller 240, and a pump unit 250.

The pump unit 250 includes a front pump 252 performing front pumping of the optical amplifier 210 and a back pump 254 performing back pumping of the optical amplifier 210.

The optical amplifier 210 receives an input optical signal through a transmission fiber, amplifies it and outputs an amplified optical signal via the transmission fiber.

The coupler 220 separates the optical signal output from the optical amplifier 210 into a first part and a second part and outputs the first part to an external device connected to the transmission fiber.

The second part of the optical signal separated by the coupler 220 is output to the detection unit 230. The detection unit 230 selects a plurality of particular channels with respect to the second part of the optical signal separated by the coupler 220 and detects an electrical signal from the optical signal in each of the selected channels. In detail, the detection unit 230 includes an optical filtering unit 231 and a photodiode unit 236. The optical filtering unit 231 includes a plurality of optical filters. In the current embodiment of the present invention, illustrated in FIG. 2, the optical filtering unit 231 includes a first optical filter 232 and a second optical filter 233. The photodiode unit 236 includes a plurality of photodiodes. In the current embodiment of the present invention, illustrated in FIG. 2, the photodiode unit 236 includes a first photodiode 237 and a second photodiode 238.

The first optical filter 232 separates an optical signal of a first channel λ₁ from the second part of the optical signal separated by the coupler 220. The second optical filter 233 separates an optical signal of a second channel λ₂ from the second part of the optical signal separated by the coupler 220. In other words, each of the first and second optical filters 232 and 233 selects only one channel from among a plurality of optical channels.

The first photodiode 237 converts the optical signal of the first channel λ₁ to an electrical signal. The second photodiode 238 converts the optical signal of the second channel λ₂ to an electrical signal.

The controller 240 receives the electrical signal of the first channel λ₁ selected by the first optical filter 232 from the first photodiode 237 and determines whether optical power of the electrical signal of the first channel λ₁ has changed. In addition, the controller 240 receives the electrical signal of the second channel λ₂ selected by the second optical filter 233 from the second photodiode 238 and determines whether optical power of the electrical signal of the second channel λ₂ has changed.

When it is determined that the optical power of the electrical signal received from the first or second photodiode 237 or 238 has changed, the controller 240 changes a current input to the pump unit 250 to compensate for the changed optical power so that the optical power of the electrical signal detected by each of the first and second photodiodes 237 and 238, is maintained constant.

In detail, when it is determined that the optical power of the electrical signal received from the first photodiode 237 has changed, the controller 240 changes a current provided to the front pump 252 to compensate for the changed optical power. When it is determined that the optical power of the electrical signal received from the second photodiode 238 has changed, the controller 240 changes a current provided to the back pump 254 to compensate for the changed optical power. According to the current embodiment of the present invention, the current provided to the front pump 252 is changed when the optical power of the electrical signal received from the first photodiode 237 changes and the current provided to the back pump 254 is changed when the optical power of the electrical signal received from the second photodiode 238 changes, but the present invention is not limited to this. In other words, the current provided to the back pump 254 is changed when the optical power of the electrical signal received from the first photodiode 237 changes and the current provided to the front pump 252 is changed when the optical power of the electrical signal received from the second photodiode 238 changes.

A proportional-integral-derivative (PID) method or other various methods may be used in the controller 240 as a feedback method for setting a current provided to each of the front pump 252 and the back pump 254 when the optical power of the electrical signal received from each of the first and second photodiodes 237 and 238 has changed. Using such a method, an optical power read from each of the first and second photodiodes 237 and 238 can be restored to a predetermined value within a short time.

For more detailed description of the optical amplification apparatus 200, it is assumed that the optical amplifier 210 is a C-band erbium doped fiber amplifier (EDFA).

The first optical filter 232 selects one channel between a first channel corresponding to a short-wavelength channel (λ₁ = 1533.46 nm) and a second channel corresponding to a long-wavelength channel (λ₂ = 1553.35 nm) within a gain bandwidth of the optical power output from the optical amplifier 210. The second optical filter 233 selects the other channel therebetween. It will be apparent that the first channel may correspond to a long-wavelength channel (λ₁ = 1553.35 nm) and the second channel may correspond to a short-wavelength channel (λ₂ = 1533.46 nm). Hereinafter, the former case will be described.

Channels output from the first and second optical filters 232 and 233 may be randomly selected, but it is advantageous to maximize an interval between wavelengths in maintaining the flatness of a wavelength division multiplexing (WDM) output. In other words, the greater the interval between the first channel corresponding to the short-wavelength channel and the second channel corresponding to the long-wavelength channel, the more advantageous it is in maintaining the flatness of the WDM output.

The controller 240 generates a feedback signal controlling a current provided to the front pump 252 based on the change in optical power of an electrical signal received from the first photodiode 237 with respect to an output optical signal of the first channel corresponding to the short-wavelength channel (λ₁ = 1533.46 nm). In addition, the controller 240 generates a feedback signal controlling a current provided to the back pump 254 based on the change in optical power of an electrical signal received from the second photodiode 238 with respect to an output optical signal of the second channel corresponding to the long-wavelength channel (λ₂ = 1553.35 nm).

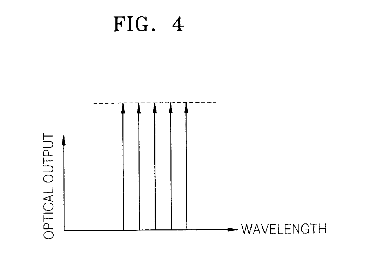

The controller 240 may also equalize the optical power of the electrical signal of the first channel with the optical power of the electrical signal of the second channel, so that a flat WDM channel output can be obtained as illustrated in FIG. 4. FIG. 4 illustrates a WDM channel output spectrum obtained from the optical amplification apparatus 200 illustrated in FIG. 2. In addition, the controller 240 may control the optical power of the electrical signal of the first channel and the optical power of the electrical signal of the second channel to make a slope in the WDM channel output.

Using the method described with reference to FIG. 2, a flat WDM channel output spectrum can be obtained, and simultaneously, constant optical power can be obtained in all channels. When the method is performed as described above, the same optical power can be obtained in all other channels as well as the first and second channels in Fig. 2. Using this method, optical power is monitored and feedback is performed so that the optical power is maintained constant. Accordingly, this method can be used when there is a partial loss or loss change in a transmission fiber and can realize automatic level control (ALC).

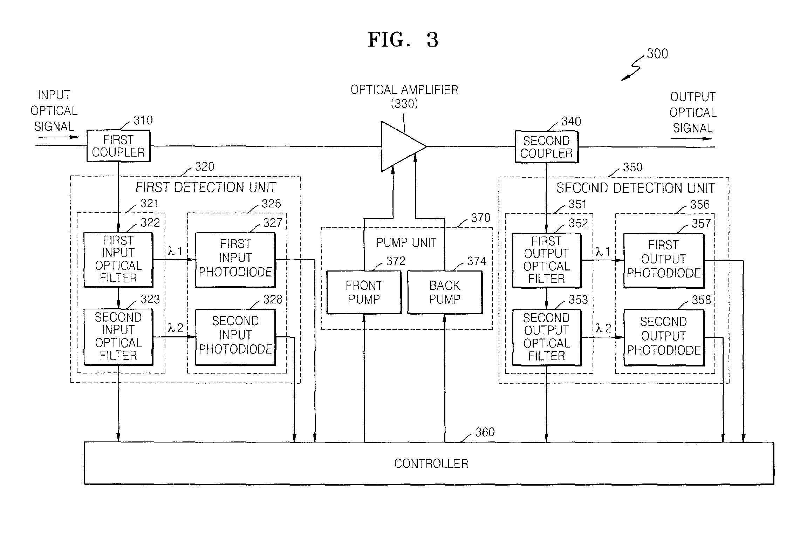

FIG. 3 illustrates an optical amplification apparatus 300 having a function of flattening a channel output, according to another embodiment of the present invention. Referring to FIG. 3, the optical amplification apparatus 300 includes a first coupler 310, a first detection unit 320, an optical amplifier 330, a second coupler 340, a second detection unit 350, a controller 360, and a pump unit 370.

The pump unit 370 includes a front pump 372 performing front pumping of the optical amplifier 330 and a back pump 374 performing back pumping of the optical amplifier 330.

The optical amplifier 330 receives an input optical signal through a transmission fiber, amplifies it, and outputs an amplified optical signal via the transmission fiber.

The first coupler 310 separates the input optical signal received through the transmission fiber into a first part and a second part and outputs the first part to an external device. The second part is input to an input terminal of the optical amplifier 330.

The first detection unit 320 selects a plurality of particular channels with respect to the second part of the input optical signal separated by the first coupler 310 and detects an electrical signal from the optical signal in each of the selected channels. In detail, the first detection unit 320 includes an input optical filtering unit 321 and an input photodiode unit 326. The input optical filtering unit 321 includes a plurality of input optical filters. In the current embodiment of the present invention, illustrated in FIG. 3, the input optical filtering unit 321 includes a first input optical filter 322 and a second input optical filter 323. The input photodiode unit 326 includes a plurality of input photodiodes. According to the current embodiment of the present invention, illustrated in FIG. 3, the input photodiode unit 326 includes a first input photodiode 327 and a second input photodiode 328.

The first input optical filter 322 separates an input optical signal of a first channel λ₁ from the second part of the input optical signal separated by the first coupler 310. The second input optical filter 323 separates an input optical signal of a second channel λ₂ from the second part of the input optical signal separated by the first coupler 310. In other words, each of the first and second input optical filters 322 and 323 selects only one channel from among a plurality of optical channels.

The first input photodiode 327 converts the optical signal of the first channel λ₁ to an electrical signal. The second input photodiode 328 converts the optical signal of the second channel λ₂ to an electrical signal.

The second coupler 340 separates the optical signal output from the optical amplifier 330 into a first part and a second part and outputs the first part to an external device via the transmission fiber. The second part of the optical signal output from the optical amplifier 330 is output to the second detection unit 350.

The second detection unit 350 selects a plurality of particular channels with respect to the second part of the optical signal and detects an electrical signal from the optical signal in each of the selected channels. In detail, the second detection unit 350 includes an output optical filtering unit 351 and an output photodiode unit 356. The output optical filtering unit 351 includes a plurality of output optical filters. In the current embodiment of the present invention, illustrated in FIG. 3, the output optical filtering unit 351 includes a first output optical filter 352 and a second output optical filter 353. The output photodiode unit 356 includes a plurality of output photodiodes. In the current embodiment of the present invention, illustrated in FIG. 3, the output photodiode unit 356 includes a first output photodiode 357 and a second output photodiode 358.

The first output optical filter 352 separates an output optical signal of the first channel λ₁ from the second part of the output optical signal separated by the second coupler 340. The second output optical filter 353 separates an output optical signal of the second channel λ₂ from the output optical signal separated by the second coupler 340. In other words, each of the first and second output optical filters 352 and 353 selects only one channel from among a plurality of optical channels. In addition, the first and second output optical filters 352 and 353 separate the optical signals for the same channels as the channels output by the first and second input optical filters 322 and 323, respectively.

For example, the first output optical filter 352 selects one channel between a first channel corresponding to a short-wavelength channel and a second channel corresponding to a long-wavelength channel within a gain bandwidth of the optical power output from the optical amplifier 330. The second output optical filter 353 selects the other channel there between. It will be apparent that the first channel may correspond to a long-wavelength channel and the second channel may correspond to a short-wavelength channel.

The first output photodiode 357 converts the optical signal of the first channel λ₁ to an electrical signal. The second output photodiode 358 converts the optical signal of the second channel λ₂ to an electrical signal.

The controller 360 receives the electrical signal of the first channel λ₁ selected by the first input optical filter 322 from the first input photodiode 327 and the electrical signal of the first channel λ₁ selected by the first output optical filter 352 from the first output photodiode 357, calculates an optical signal gain from each electrical signal received for the first channel λ₁, and determines whether there is a change in the optical signal gain.

In addition, the controller 360 receives the electrical signal of the second channel λ₂ selected by the second input optical filter 323 from the second input photodiode 328 and the electrical signal of the second channel λ₂ selected by the second output optical filter 353 from the second output photodiode 358, calculates an optical signal gain from each electrical signal received for the second channel λ₂, and determines whether there is a change in the optical signal gain.

When it is determined that there is a change in the optical signal gain for the first or second channel λ₁ or λ₂, the controller 360 changes a current input to the pump unit 370 to compensate for a changed degree of the optical signal gain. With such operation, the controller 360 can control the optical signal gain for each of the first and second channels λ₁ and λ₂ to be maintained constant.

In detail, when it is determined that the optical signal gain for the first channel λ₁ has changed, the controller 360 changes a current provided to the front pump 372 to compensate for the changed optical signal gain. When it is determined that the optical signal gain for the second channel λ₂ has changed, the controller 360 changes a current provided to the back pump 374 to compensate for the changed optical signal gain. According to the current embodiment of the present invention, the current provided to the front pump 372 is changed when the optical signal gain for the first channel λ₁ changes and the current provided to the back pump 374 is changed when the optical signal gain for the second channel λ₂ changes, but the present invention is not limited to this. In other words, the current provided to the back pump 374 is changed when optical signal gain for the first channel λ₁ changes and the current provided to the front pump 372 is changed when the optical signal gain for the second channel λ₂ changes.

The PID method or other various methods may be used in the controller 360 as a feedback method for setting a current provided to each of the front pump 372 and the back pump 374 when the optical signal gain for each of the first and second channels λ₁ and λ₂ has changed.

According to the method described with reference to FIG. 3, not only a flat WDM channel output can be obtained but also automatic gain control (AGC) in an optical amplifier can be accomplished. When the WDM channel output illustrated in FIG. 1C is input to an optical amplifier, the slope of the WDM channel output can be compensated for by differently setting optical signal gains respectively for the first and second channels λ₁ and λ₂ using the method described with reference to FIG. 3, so that a flat WDM channel output as illustrated in FIG. 4 can be obtained. FIG. 4 illustrates a WDM channel output spectrum in the optical amplification apparatus 300. As described above, AGC can be realized, and simultaneously, the slope of the WDM channel output can be compensated for using the method described with reference to FIG. 3.

The present invention provides an optical amplification apparatus which can simultaneously accomplish ALC and maintain the flatness of a WDM output with respect to an optical amplifier. In addition, the present invention can also provide an optical amplification apparatus which can simultaneously accomplish AGC and maintain the flatness of a WDM output with respect to an optical amplifier. Furthermore, the present invention can provide an optical amplification apparatus which can simultaneously accomplish ALC and AGC and maintain the flatness of a WDM output with respect to an optical amplifier.

As described above, since the present invention accomplishes ALC and AGC and allows the flatness of a WDM output to be maintained, a problem of a slope occurring in the WDM output due to stimulated Raman scattering (SRS) in a transmission fiber can be overcome. In addition, feedback is fast enough to suppress transient effects in an optical signal output.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An optical amplification apparatus having a function of flattening a channel output spectrum, the optical amplification apparatus comprising:
an optical amplifier amplifying an optical signal and outputting an output optical signal;
a pump unit pumping the optical signal at a front and a back of the optical amplifier;
a detection unit selecting a plurality of particular channels with respect to a separated part of the output optical signal of the optical amplifier and converting an optical signal of each of the selected channels into an electrical signal; and
a controller receiving electrical signals in the selected channels, respectively, determining whether optical power of each electrical signal has changed, and controlling a current provided to the pump unit according to the change in the optical power to eliminate the change in the optical power.

2. The optical amplification apparatus of claim 1, further comprising a coupler separating the output optical signal from the optical amplifier and providing the separated part of the output optical signal to the detection unit.

3. The optical amplification apparatus of claim 1 or 2, wherein the detection unit comprises:
a plurality of optical filters selecting the plurality of the particular channels with respect to the separated part of the output optical signal; and
a plurality of photodiodes respectively detecting the electrical signals in the channels selected by the respective optical filters.

4. The optical amplification apparatus of claim 3, wherein the plurality of optical filters comprise a first optical filter selecting a first channel with respect to the separated part of the output optical signal and a second optical filter selecting a second channel with respect to the separated part of the output optical signal, and
the plurality of photodiodes comprise a first photodiode detecting an electrical signal in the first channel selected by the first optical filter and a second photodiode detecting an electrical signal in the second channel selected by the second optical filter.

5. The optical amplification apparatus of claim 1, wherein the pump unit comprises:
a front pump pumping the optical signal at the front of the optical amplifier; and
a back pump pumping the optical signal at the back of the optical amplifier.

6. The optical amplification apparatus of claim 5, wherein each of the front pump and the back pump comprises a laser diode.

7. The optical amplification apparatus of claim 5 or 6, wherein the controller controls a current provided to the front pump according to a change in optical power of the electrical signal received from the first photodiode and controls a current provided to the back pump according to a change in optical power of the electrical signal received from the second photodiode.

8. The optical amplification apparatus of one of claims 4 to 7, wherein the first channel is a short-wavelength channel with respect to the separated part of the output optical signal and the second channel is a long-wavelength channel with respect to the separated part of the output optical signal, or the first channel is a long-wavelength channel with respect to the separated part of the output optical signal and the second channel is a short-wavelength channel with respect to the separated part of the output optical signal.

9. The optical amplification apparatus of one of claims 4 to 8, wherein an interval between a wavelength of the first channel and a wavelength of the second channel is maximized.

10. The optical amplification apparatus of one of claims 4 to 9, wherein the controller controls the current provided to the pump unit to equalize optical power of the electrical signal in the first channel with optical power of the electrical signal in the second channel.

11. An optical amplification apparatus having a function of flattening a channel output spectrum, the optical amplification apparatus comprising:
an optical amplifier amplifying an input optical signal and outputting an output optical signal;
a pump unit pumping the input optical signal at a front and a back of the optical amplifier;
a first detection unit selecting a plurality of particular channels with respect to a separated part of the input optical signal to be input to an input terminal of the optical amplifier and converting an input optical signal in each of the selected channels into an electrical signal;
a second detection unit selecting the same channels as the plurality of particular channels selected by the first detection unit with respect to a separated part of the output optical signal and converting an output optical signal in each of the selected channels into an electrical signal; and
a controller receiving electrical signals respectively in the selected channels from the first and second detection units, determining whether an optical signal gain for each of the particular channels has changed, and controlling a current provided to the pump unit according to a change in the optical signal gain.

12. The optical amplification apparatus of claim 11, further comprising:
a first coupler separating the input optical signal to be input to the input terminal of the optical amplifier and providing the separated part of the input optical signal to the first detection unit; and
a second coupler separating the output optical signal from the output terminal of the optical amplifier and providing the separated part of the output optical signal to the second detection unit.

13. The optical amplification apparatus of claim 11 or 12, wherein the first detection unit comprises a plurality of input optical filters selecting the plurality of the particular channels with respect to the separated part of the input optical signal and a plurality of input photodiodes respectively detecting the electrical signals in the channels selected by the respective input optical filters, and
the second detection unit comprises a plurality of output optical filters selecting the plurality of the particular channels with respect to the separated part of the output optical signal and a plurality of output photodiodes respectively detecting the electrical signals in the channels selected by the respective output optical filters.

14. The optical amplification apparatus of claim 13, wherein the plurality of input optical filters comprise a first input optical filter selecting a first channel with respect to the separated part of the input optical signal and a second input optical filter selecting a second channel with respect to the separated part of the input optical signal,
the plurality of input photodiodes comprise a first input photodiode detecting an electrical signal in the first channel selected by the first input optical filter and a second input photodiode detecting an electrical signal in the second channel selected by the second input optical filter,
the plurality of output optical filters comprise a first output optical filter selecting the first channel with respect to the separated part of the output optical signal and a second output optical filter selecting the second channel with respect to the separated part of the output optical signal, and
the plurality of output photodiodes comprise a first output photodiode detecting an electrical signal in the first channel selected by the first output optical filter and a second output photodiode detecting an electrical signal in the second channel selected by the second output optical filter.

15. The optical amplification apparatus of one of claims 11 to 14, wherein the pump unit comprises:
a front pump pumping the input optical signal at the front of the optical amplifier; and
a back pump pumping the input optical signal at the back of the optical amplifier.

16. The optical amplification apparatus of claim 15, wherein each of the front pump and the back pump comprises a laser diode.

17. The optical amplification apparatus of claim 15 or 16, wherein the controller controls a current provided to the front pump according to a change in an optical signal gain with respect to the electrical signals respectively received from the first input photodiode and the first output photodiode and controls a current provided to the back pump according to a change in an optical signal gain with respect to the electrical signals respectively received from the second input photodiode and the second output photodiode.

18. The optical amplification apparatus of one of claims 14 to 17, wherein the first channel is a short-wavelength channel with respect to the separated part of the output optical signal and the second channel is a long-wavelength channel with respect to the separated part of the output optical signal, or the first channel is a long-wavelength channel with respect to the separated part of the output optical signal and the second channel is a short-wavelength channel with respect to the separated part of the output optical signal.

19. The optical amplification apparatus of one of claims 14 to 18, wherein an interval between a wavelength of the first channel and a wavelength of the second channel is maximized.

20. The optical amplification apparatus of one of claims 14 to 19, wherein the controller differently sets an optical signal gain in the first channel and an optical signal gain in the second channel to control the current provided to the pump unit so that outputs in the first and second channels are flattened.

21. The optical amplification apparatus of one of claims 1 to 20, wherein the optical amplifier is used in a wavelength division multiplexing (WDM) optical transmission system.
